# EUROPEAN PATENT SPECIFICATION

(11) **EP 3 299 939 B1**
(45) Date of publication and mention of the grant of the patent: **08.05.2019**
(21) Application number: 16190893.4
(22) Date of filing: 27.09.2016
(51) Int. Cl.: G06F 3/041, G06F 3/01

(54) **INPUT APPARATUS WITH TOUCH SENSITIVE INPUT DEVICE**
EINGABEVORRICHTUNG MIT BERÜHRUNGSEMPFINDLICHEM EINGABEGERÄT
APPAREIL AVEC DISPOSITIF D'ENTRÉE SENSIBLE TACTILE

(43) Date of publication of application: 28.03.2018
(73) Proprietor: Alpine Electronics, Inc., Tokyo (JP)
(72) Inventor: Barota, Ovidiu-Petru, 70567 Stuttgart (DE)
(74) Representative: Schmitt-Nilson Schraud Waibel Wohlfrom Patentanwälte Partnerschaft mbB

(56) References cited:
- US-A1- 2010 141 407
- US-A1- 2012 313 857
- US-A1- 2014 167 938

## Description

The present invention relates to an input apparatus comprising a touch sensitive input device configured so as to detect a touch of a user input member to provide at least one input functionality, and to a vehicle comprising such input apparatus.

Such input apparatuses with a touch sensitive input device are commonly used in electronic systems, for example to select and trigger input functionalities according to "buttons" displayed on a display screen or marked on a touch surface using a user input member, such as the user's finger. A touch sensitive input device typically includes a sensing region on a touch surface which uses capacitive, resistive, inductive, optical and/or other touch sensing technology to determine a touch and location and/or motion of the user's finger and/or other input members on the touch surface. Such touch sensitive input device can be used to provide an input to an electronic system. For example, touch sensitive input devices are used as input devices in vehicles, such as automobiles, or other computing systems including mobile systems such as communication systems or media systems.

Currently, such input apparatuses with touch surfaces are widely available in the automotive field. Typically these have different sizes, forms and count of trackable fingers. Further, input apparatuses are known in which touch surfaces are often associated with vibration based feedback. That is, a touch by a user input member is associated with a vibration generated by the input apparatus causing a tactile feedback for the user upon a touch of the touch surface. Such input apparatuses typically use a vibration motor technology to indicate a button press confirmation, however the touch surface remains rigid when pressed by a human finger during a touch. Further, such input apparatuses are often associated with a display, building an imminent visual feedback (e.g. like a classic smartphone touch screen) .

Furthermore, input apparatuses are known which use a classical key or button technology which provides advantages as regards typical key feedback when pressing a classic push button or key. Such "in-depth-push" feedback offers advantages regarding intuitive feedback for the user when pressing a button or key since the feedback is provided in direct reaction and in the opposite direction to the pressing action of the button or key.

Presently, typical automotive touch technology does not offer "in-depth-push" capabilities like a classic push button technology, because current touch surfaces are not designed to simulate an in-depth pressing feeling (like a classic press button feedback). Users are still used to classic button push technology and are intuitively using it . Further, classic press button technology often cannot be used together with a touch surface, since then the touch surface cannot be dynamically configured to act only on a specific area which may vary depending on the respective application or human machine interface.

US 2012/0212442 A1 discloses a device for transmitting information to a living being, wherein an information related to a display is transmitted to a tactile sense of the living being touching a shape-memory alloy arranged on a display panel, by motion of expansion and contraction of the shape-memory alloy, without obstructing the visibility of the display panel. The device includes a transparent sheet-like tactile perceptual unit, arranged on the display panel, and a signal generating unit, which generates a signal voltage for driving the tactile perceptual unit.

WO 2010/009552 A1 discloses a method which includes displaying an image of a key on a touch-sensitive display and detecting a touch on the touch-sensitive display at a first location. When the first location is located in a predetermined area related to the key, tactile feedback is provided that simulates a characteristic of a physical key. At least one actuator vibrates in an ultrasonic frequency range to provide tactile feedback.

JP 2010-176299 A provides an input device in which the boundary of a touch panel can be changed dynamically. A touch panel type display includes a display part for switching and displaying a plurality of input key arrangements, a touch panel arranged on the display part, a biometal fiber arranged between the touch panel and the display part along the boundary of input keys displayed in the plurality of input key arrangements, and configured to contract under tension or expand in relaxation according to a conductive state, and a control part for controlling power supply to the biometal fiber so that the biometal fiber along the boundary of the input keys currently displayed at the display part can contract under tension. The surface of the touch-sensitive panel display changes in the case of energizing the biometal fiber.

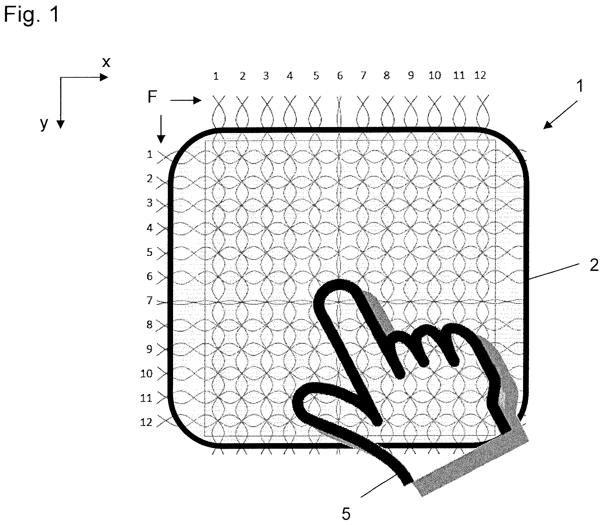

US 2014/167938 A1 is directed to a device and method for providing tactile feed-back which comprises displaying a visual representation of a physical object having at least one haptic property and which generates the tactile feedback via a feedback apparatus in response to a pressure on the feedback apparatus applied by a user. Particularly, an accessory for a mobile device can be embedded in or integral with a body of the mobile device as shown in Fig. 1B and can be constructed in a mattress-like configuration including a malleable material/membrane positioned on a plurality of hair-like fibers whose properties, such as stiffness, temperature, etc. can be controlled using one or more actuators receiving variable frequency patterns. This mattress-like structure functions to permit a realistic haptic feeling of various real world objects. According to an embodiment, the membrane of the accessory responds to pressure applied thereto by, for example, the finger of a user.

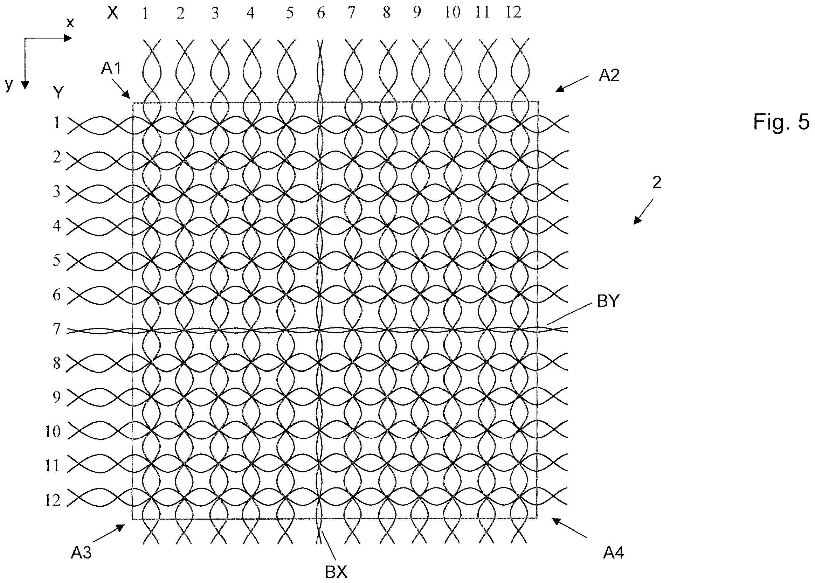

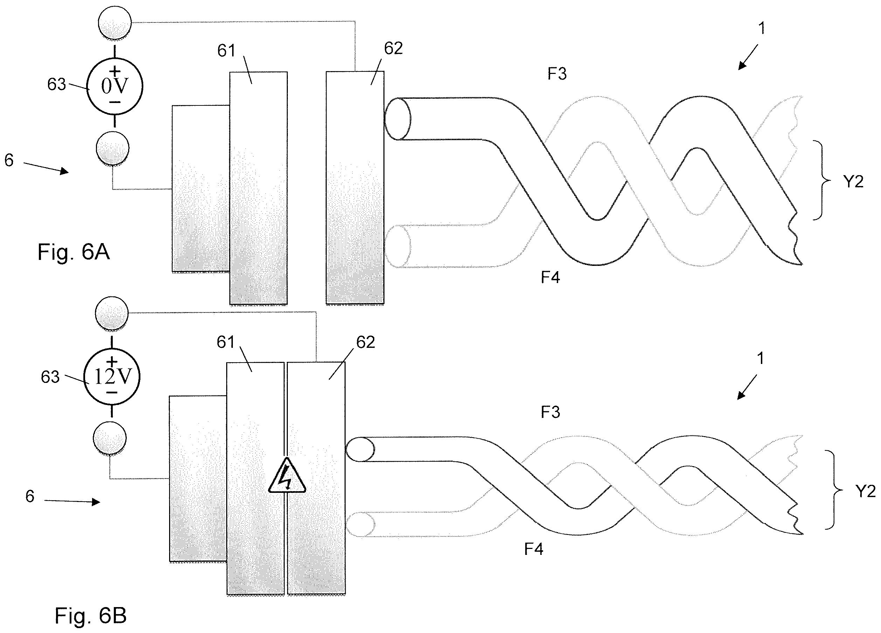

US 2012/313857 A1 discloses an adaptable input/output device which may replace a conventional keyboard or other input/output device such as a touch screen. The device comprises three layers, namely a polymorphic layer, a display layer and an observation layer, wherein the three layers cooperate in order to interact with a user in a manner that adapts to changing use contexts. Each of posts as shown in Fig. 6 is movable to one of the shown positions by activating an actuator illustrated in Fig. 5 to drive the post.

An object of the present invention is to provide an input apparatus comprising a touch sensitive input device configured so as to detect a touch of a user input member which is capable of providing an in-depth-push tactile feedback, and a vehicle comprising such input apparatus.

The invention relates to an input apparatus comprising a touch sensitive input device, and to a vehicle comprising such input apparatus according to the independent claims. Embodiments are disclosed in the dependent claims.

According to an aspect, there is provided an input apparatus comprising a touch sensitive input device configured so as to detect a touch of a user input member to provide at least one input functionality, the touch sensitive input device comprising a touch surface and having a pressing resistance upon a touch of the user input member in a pressing direction transverse to the touch surface. The touch sensitive input device further comprises at least one layer arranged beneath the touch surface, wherein the at least one layer comprises a plurality of longitudinal elements which are displaceable within the at least one layer with respect to one another. The input apparatus further comprises an actuator which is configured to actuate a displacement of at least a selected one of the longitudinal elements during a touch of the user input member, wherein the touch sensitive input device is configured to provide a pressing resistance for the user input member which varies upon the displacement of the at least one of the longitudinal elements at a location of a touch of the user input member generating a tactile feedback for the user input member.

According to another aspect, a vehicle comprises such input apparatus which is configured to provide at least one input functionality for a human machine interface of the vehicle.

The input apparatus according to aspects of the invention is capable of configuring dynamically any "pressable" surface areas according to a current human machine interface (HMI) status. The end user can press and tactile-feel the specific area where a push button is simulated on the touch surface by the HMI. In particular, by actuating a displacement of at least a selected one of the longitudinal elements during a touch of the user input member, the touch surface provides a pressing resistance for the user input member which varies upon the displacement of the at least one of the longitudinal elements at the location of the touch of the user input member. Such varying pressing resistance generates a tactile feedback for the user input member in order to simulate a press feeling, in particular an in-depth-push feedback. The displacement of the at least one of the longitudinal elements may be performed at the desired coordinate of the touch surface where the user touches the touch surface. In this way, the touch surface and associated push feedback may be configured dynamically and may vary depending on the respective application or human machine interface. For example, depending on the particular location or coordinate of a "button" on the touch surface, a different one or different ones of the longitudinal elements may be actuated and displaced. As such the HMI can generate or simulate any press area configuration with multiple press areas.

The touch sensitive input device or touch surface, respectively, has a particular pressing resistance upon a touch of the user input member in a pressing direction transverse to the touch surface. As will be explained in more detail below, the pressing resistance, and thus in-depth tactile feedback, depends on the material of the touch surface, and on the structure and material of the layers and the longitudinal elements and their positions comprised in these layers beneath the touch surface.

According to an embodiment, the at least one layer comprises a plurality of longitudinal thread elements which are coupled with the actuator. In a preferred embodiment, the at least one layer comprises a plurality of longitudinal fiber elements.

According to an embodiment, upon displacement of the selected one of the longitudinal elements, a distance of the respective one of the longitudinal elements to an adjacent one of the longitudinal elements decreases. This increases the pressing resistance of the touch sensitive input device and the touch surface, respectively, for the user input member, particularly at the location where the distance is decreased.

According to the invention, within the plurality of longitudinal elements at least respective two of the longitudinal elements are twisted with respect to one another forming a respective pair of longitudinal elements. In such configuration, the actuator may advantageously be configured to actuate displacement by at least one of a pulling movement and rotating movement of the respective pair of longitudinal elements.

According to an embodiment, the plurality of longitudinal elements are arranged in a matrix configuration, wherein the actuator is configured to actuate displacement of at least a first one of the longitudinal elements arranged in a first direction and displacement of at least a second one of the longitudinal elements arranged in a second direction which is transverse to the first direction, wherein the location at which the first one and second one of the longitudinal elements cross each other corresponds to a coordinate of the touch surface where the touch of the user input member occurs.

According to a further embodiment, the plurality of longitudinal elements are arranged in a matrix configuration, wherein the actuator is configured to actuate displacement of at least a first one of the longitudinal elements arranged in a first direction and/or displacement of at least a second one of the longitudinal elements arranged in a second direction which is transverse to the first direction. The at least first one of the longitudinal elements forms a first touch area delimitation and the at least second one of the longitudinal elements forms a second touch area delimitation.

For example, the touch area delimitations form a respective obstacle which may be felt by the user as a permanent "button barrier". As such, the input apparatus can simulate obstacles (e.g. like a known button barrier between buttons, such like a ridge) between any "pressable" areas (i.e., touch areas) formed by the touch area delimitations. Advantageously, the end user can physically tactile-feel any areas on the touch surface which can be pressed without looking at it, so the end user can stay concentrated with the eyes on the road.

According to an embodiment, the at least one layer comprises a plurality of longitudinal thread elements, with at least respective two of the longitudinal thread elements twisted with respect to one another forming a respective thread pair. The plurality of longitudinal thread elements are arranged in a XY thread pair matrix configuration, with X and Y being orthogonal directions in a plane parallel to the touch surface and a first plurality of thread pairs arranged in X direction and a second plurality of thread pairs arranged in Y direction. The actuator is configured to actuate displacement by at least one of a pulling movement and rotating movement of a first thread pair arranged in X direction and/or by at least one of a pulling movement and rotating movement of a second thread pair arranged in Y direction. In an embodiment of such configuration, the location at which the first thread pair and second thread pair cross each other corresponds to a XY coordinate of the touch of the user input member. The displacement of the first thread pair and second thread pair may thus be performed at the desired coordinate of the touch surface where the user touches the touch surface for triggering an input functionality. In this way, the touch surface and associated push feedback may be configured dynamically at the desired coordinate(s) of the touch surface and may vary depending on the respective application or human machine interface.

According to another embodiment, the first thread pair forms a touch area delimitation in X direction and the second thread pair forms a touch area delimitation in Y direction. Such touch area delimitations may form a respective obstacle which may be felt by the user as a permanent "button barrier".

According to a further embodiment, in the above described configuration, the actuator is configured to actuate displacement by at least one of a pulling movement and rotating movement of a third thread pair arranged in X direction and/or by at least one of a pulling movement and rotating movement of a fourth thread pair arranged in Y direction. The location at which the first thread pair and second thread pair cross each other corresponds to a XY coordinate of the touch of the user input member (e.g., at the XY coordinate of the touch surface where the user touches the touch surface for triggering an input functionality). The third thread pair forms a touch area delimitation in X direction and the fourth thread pair forms a touch area delimitation in Y direction, which may thus form a respective obstacle which may be felt by the user as a permanent "button barrier".

According to an embodiment, the touch sensitive input device comprises at least one first layer and second layer arranged one upon the other and beneath the touch surface, wherein the plurality of longitudinal elements are arranged in a matrix configuration, and at least a first one of the longitudinal elements is arranged in a first direction in the first layer and at least a second one of the longitudinal elements is arranged in the second layer in a second direction which is transverse to the first direction. Preferably, the location at which the first one and second one of the longitudinal elements cross each other corresponds to a coordinate of the touch surface where the touch of the user input member occurs.

According to an embodiment, the plurality of longitudinal elements are arranged within a silicon rubber material. For example, the longitudinal elements may be formed by a metal material or by a pattern (e.g. formed by silicon rubber material) formed within the silicon rubber material.

According to an embodiment, the plurality of longitudinal elements are arranged such that a distance of a selected one of the longitudinal elements to an adjacent one of the longitudinal elements is approximately 2 mm between respective center points of the longitudinal elements, and a distance of the selected one of the longitudinal elements to the adjacent one of the longitudinal elements is approximately 1 mm between respective center points of the longitudinal elements upon displacement of the selected one of the longitudinal elements. For example, the at least one layer comprises a plurality of longitudinal thread elements, with at least respective two of the longitudinal thread elements twisted with respect to one another forming a respective thread pair, and at least two of the thread pairs are arranged at a distance of approximately 5 mm between respective center points of the thread pairs.

Aspects and embodiments of the invention will now be described with reference to the drawings, in which:
- Fig. 1: shows an input apparatus according to an embodiment of the invention,
- Fig. 2: shows a more detailed view of an embodiment of longitudinal elements comprised in the input apparatus according to Fig. 1,
- Fig. 3A: shows a cross-sectional view of a portion of an input apparatus according to an embodiment of the invention as depicted in Fig. 1 with non-displaced longitudinal elements,
- Fig. 3B: shows another cross-sectional view of a portion of an input apparatus as shown in Fig. 3A during a touch by a user's finger,
- Fig. 4A: shows a cross-sectional view of a portion of an input apparatus according to Fig. 1 with displaced longitudinal elements,
- Fig. 4B: shows another cross-sectional view of a portion of an input apparatus as shown in Fig. 4A during a touch by a user's finger,
- Fig. 5: shows a more detailed view of another embodiment of longitudinal elements comprised in the input apparatus according to Fig. 1,
- Fig. 6A: shows an actuator and a pair of twisted longitudinal elements of an input apparatus according to an embodiment of the invention with non-displaced longitudinal elements,
- Fig. 6B: shows an actuator and a pair of twisted longitudinal elements according to the embodiment of Fig. 6A with displaced longitudinal elements,
- Fig. 7: shows an input apparatus comprised in a vehicle according to an embodiment of the invention,
- Fig. 8: shows an input apparatus comprised in a vehicle according to another embodiment of the invention.

Embodiments of the invention will now be explained in more detail according to the embodiments as shown in Figures 1 to 4.

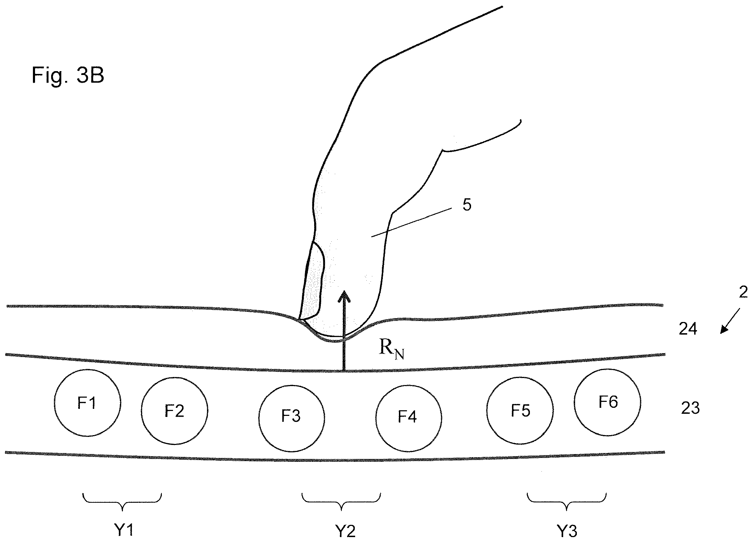

An input apparatus 1 comprises a touch sensitive input device 2, such as a touch pad or touch screen, which is configured so as to detect a touch of a user input member 5 for providing at least one input functionality. For example, the touch sensitive input device 2 comprises a capacitive touch surface which is capable of capacitively detecting a touch of a user input member 5 such as a user's finger, i.e a touch of the user's finger on the touch surface when actually touching the touch surface (cf. Fig. 3B explained in more detail below). The detecting of a touch may be performed by any known technology as is known in the art, e.g. by capacitive, resistive, inductive, optical and/or any other technology to determine a touch and location and/or motion of a user's finger and/or other input members.

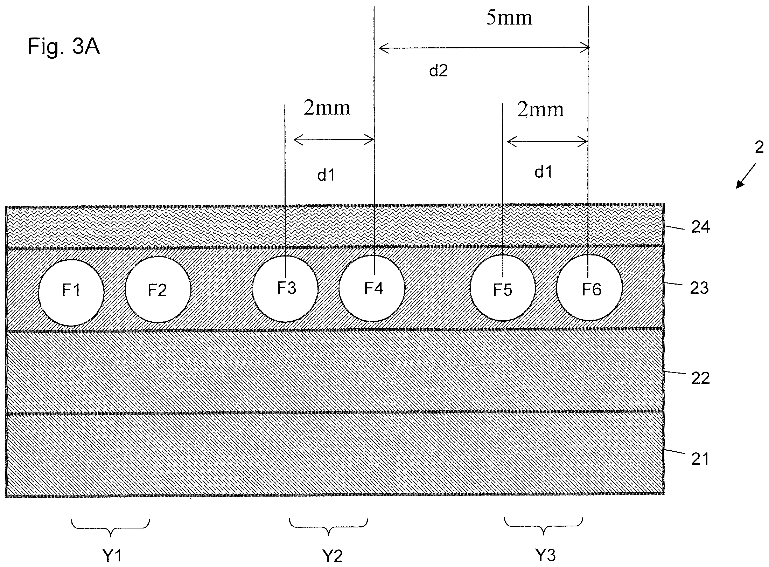

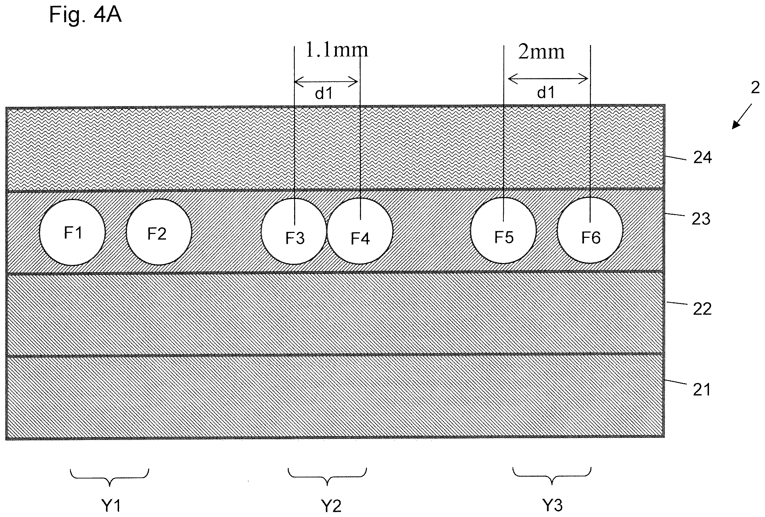

The touch sensitive input device 2 comprises a touch surface on top of it (cf. Fig. 3A, 4A: touch surface 24) which is touched by the user input member 5. The touch sensitive input device 2 further comprises at least one layer (in the present embodiment two layers 23 and 22) arranged beneath the touch surface 24. The at least one layer (here: each layer 23, 22) comprises a plurality of longitudinal elements F1-Fn, which are preferably configured as longitudinal thread elements in the present embodiment. In principle, the longitudinal elements can have any longitudinal form and any cross-sectional form appropriate for the current function, as explained in more detail below. For example, the cross-section may be circular, rectangular or elliptical. The longitudinal elements generally have an extension in longitudinal direction which is significantly larger than in cross-section. Preferably, the longitudinal elements F1-Fn may each have the form of a thread, e.g. the thread being formed by one or more fibers. For example, a longitudinal element F1-Fn may be formed by a single fiber, or may be formed by plural fibers, for instance a yarn of plural (e.g. twisted) fibers.

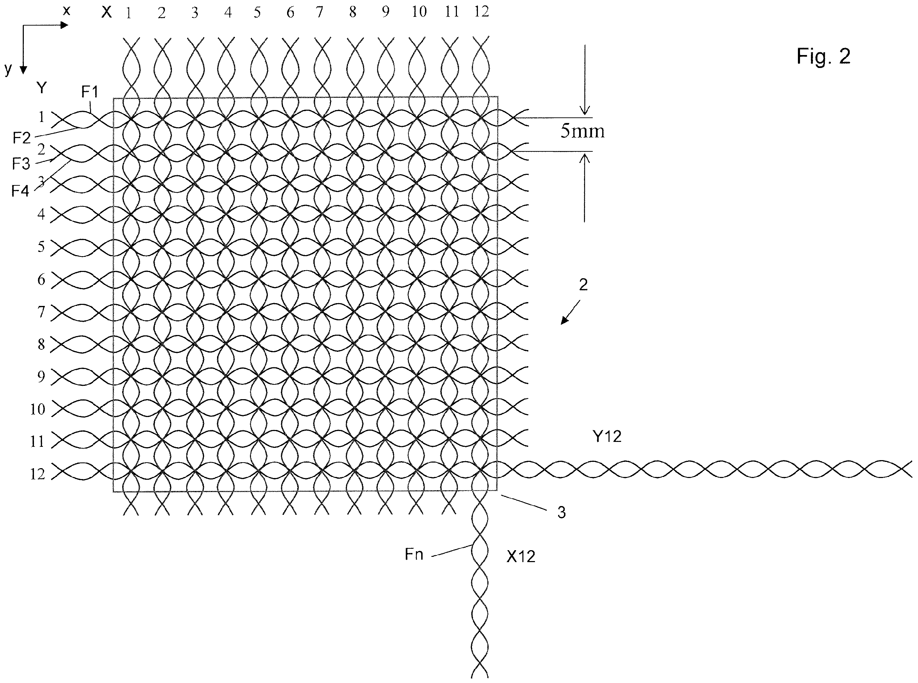

As shown in greater detail in Fig. 2, the input apparatus 1 comprises a plurality of longitudinal thread elements F1-Fn. For example, each longitudinal thread element is formed by a respective longitudinal fiber element. At least respective two of the longitudinal fiber elements F1-Fn are twisted with respect to one another forming a respective fiber pair X1-X12 and Y1-Y12 arranged in respective Y and X directions of a xy coordinate system, which is a Cartesian coordinate system with orthogonal X and Y directions. Thus, the plurality of longitudinal fiber elements F1-Fn are arranged in a XY fiber pair matrix configuration. In the present embodiment, X and Y are orthogonal directions in a plane parallel to the touch surface 24. That is, the xy coordinate system with directions X and Y lies in a plane parallel to the touch surface 24. A first plurality of fiber pairs Y1-Y12 is arranged in X direction and a second plurality of fiber pairs X1-X12 is arranged in Y direction, as shown in Fig. 2. At one end in X direction and at one end in Y direction of the XY fiber pair matrix configuration, a respective actuator 6 (cf. Fig. 6) may be arranged to engage with a respective fiber pair. That is, for actuating a location at a particular coordinate XY, an actuator 6 for a respective fiber pair arranged in X direction and an actuator 6 for a respective fiber pair arranged in Y direction is actuated, as described in more detail below. There are also embodiments in which a single actuator may be configured to activate one or both respective fiber pairs in X and Y direction.

Any other configuration of longitudinal elements other than a matrix configuration may also be used according to embodiments of the invention. As such, only one layer of longitudinal elements, or more than two layers with longitudinal elements, may be arranged beneath the touch surface, which need not be arranged in mutual perpendicular extension.

As shown in Figures 2 and 3A-4B, a fiber pair Y1 is formed by twisted longitudinal fibers F1, F2, a fiber pair Y2 is formed by twisted longitudinal fibers F3, F4, and a fiber pair Y3 is formed by twisted longitudinal fibers F5, F6. The fiber pairs X1, Y1 are delimiting one end of a usable haptic area 3, and the fiber pairs X12, Y12 are delimiting another end of the usable haptic area 3.

As further shown in Figures 2, 3A and 4A, the plurality of longitudinal fibers F1-Fn are arranged such that a distance d1 of one of the longitudinal fibers F1-Fn to the adjacent one of the longitudinal fibers F1-Fn (i.e., in the present example, the other one of the same fiber pair) is approximately 2 mm between respective center points of the fibers (in non-displaced position). On the other hand, the distance d1 is approximately 1 mm (here: 1.1 mm) (under consideration of manufacturing tolerances of the fibers) between respective center points of the fibers F1-Fn when one or both of the fibers are displaced (such as tensioned), as described below. Further, respective two thread pairs X1-Y12 are arranged at a distance d2 of approximately 5 mm between respective center points of the thread pairs.

Fig. 3A shows a cross-sectional view of a portion of an input apparatus according to an embodiment of the invention as depicted in Fig. 1 with non-displaced fibers F1-Fn. The touch sensitive input device 2 comprises a plurality of layers 21-24. In an embodiment of a capacitive touch technology, the layer 21 is a capacitive layer comprising a rather hard plastic material through which a touch on the touch surface 24 can be detected. The touch surface 24 can be formed by a layer comprising a relatively soft surface material, like a gel material. The layer 22 comprises a cushion material and has the x-axis fibers X1-X12 embedded therein. Analogously to the layer 22, the layer 23 comprises a cushion material and has the y-axis fibers Y1-Y12 embedded therein. The cushion material may be flexible silicon rubber material, for example. In Fig. 3A, the fibers F1-F6 are shown in an untensioned, i.e. non-displaced state, whereas in Fig. 4A the fibers F3, F4 are shown in a tensioned, i.e. displaced state.

Generally, the longitudinal elements (e.g. fibers) F1-Fn should have a material characteristic which is stiffer (having a harder pressure resilience) than that of the material of the layers 22 and 23 in which they are embedded. As such, the pressure resilience characteristics of the layers 22, 23 (i.e. pressure resistance) can be varied locally and dynamically with displacement of selected ones of the longitudinal elements F1-Fn.

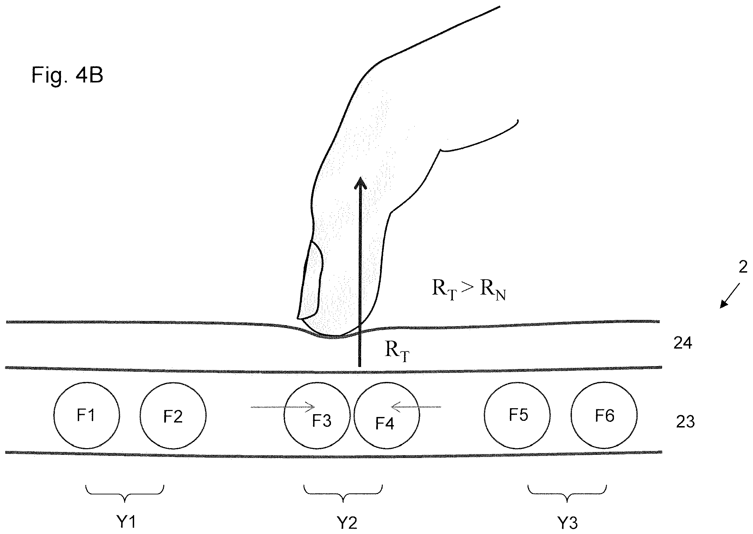

Figures 3B and 4B show respective cross-sectional views of a portion of an input apparatus as shown in Fig. 3A and 4A, respectively, during a touch by a user's finger. In an untensioned, i.e. non-displaced state of the fibers F3, F4, according to Fig. 3B the touch sensitive input device 2 and its touch surface 24 have a (normal) pressing resistance RN upon a touch of the user input member 5 when pressing in a pressing direction transverse (here: orthogonal) to the touch surface 24. The pressing resistance RN acts in opposite direction to the pressing direction. In a tensioned, i.e. displaced state of the fibers F3, F4, according to Fig. 4B the touch sensitive input device 2 and its touch surface 24 have a (tensioned) pressing resistance RT different from RN upon a touch of the user input member 5 when pressing in a pressing direction transverse to the touch surface 24. The pressing resistance RT is greater than RN and also acts in opposite direction to the pressing direction. The variance of the pressing resistance from RN to RT with RT>RN results from the displacement of at least one of the fibers F3, F4 (here displacement of both fibers F3, F4 towards each other) decreasing the distance d1 between them. The closer arranged fibers F3, F4 stiffen the resilient material characteristics of the cushion material within layer 23, and thus pressure resilience of layer 23, by increasing the influence of the rigid fibers at the location of the decreased distance d1 between fibers F3, F4, that is at the location of the touch of the user input member 5. Such varying pressing resistance RT>RN creates a tactile feedback to the user input member 5 when pressing in the direction transverse to the touch surface 24 as compared to the pressing resistance RN felt by the user when initiating the touch and pressing movement. An actuator 6 (such as shown in Fig. 6) actuates the longitudinal element displacement at the corresponding location/coordinate of the touch surface 24 when the user input member 5 touches the touch surface 24, so that the user can tactile-feel the variance of the pressing resistance from RN to RT. As such, a feedback control loop from the layer 21 and its associated electronic circuitry detecting an actual touch by the user input member 5 transmitting the corresponding coordinates of the touch to the actuator 6 is provided (not shown in the Figures).

The absolute value of such pressing resistances RN and RT is not of particular relevance. Rather, it should be ensured that the user can tactile-feel a relative variance of the pressing resistance (here: from RN to RT) upon a user's touch and corresponding displacement of the respective longitudinal elements within the respective layers.

As shown in Fig. 6A and 6B, an actuator 6 may be connected to a respective fiber pair (here: Y2 with fibers F3, F4) by means of respective piezo elements 61, 62 which are connected with an electric voltage source 63. Particularly, the piezo element is connected with the fiber pair Y2, whereas both piezo elements 61, 62 are connected to the voltage source 63 applying an electrical voltage to the piezo elements if a displacement of the fibers F3, F4 shall be initiated. The application of an electrical field by an electrical voltage at the piezo elements 61, 62 creates a mechanical deformation (in the present example an attraction of the elements 61, 62, such as a magnetic attraction force) such that the fiber pair Y2 is pulled, i.e. tensioned, in the longitudinal direction, as shown in Fig. 6B. Such principle of piezo electric attraction of elements 61, 62 is well known to the skilled person. Different technologies for displacement of the longitudinal elements can also be used, depending on the particular implementation and type of application in which the input apparatus is used.

The actuator 6 can actuate displacement of the fibers by a pulling movement (as shown in Fig. 6B) of the fiber pair Y2 and/or by a rotating movement of the fiber pair Y2. By pulling and/or rotating the fiber pair Y2, since the fibers F3, F4 are twisted, the fibers F3, F4 move closer to each other reducing the distance d1 as shown in Fig. 3A and 4A. For example, in non-activated status of the actuator 6 according to Fig. 6A, the distance d1 between fibers F3, F4 is approximately 2 mm (Fig. 3A), and in activated status of the actuator 6 according to Fig. 6B the distance d1 between fibers F3, F4 is approximately 1.1 mm (Fig. 4A).

By such pulling and/or rotating movement of the fiber pair Y2, the fibers F3, F4 are both displaced more or less equally in mutual direction towards each other (as shown in Fig. 4B by the arrows) as a result of the twisting of the fibers F3, F4 with respect to one another. This provides a rather precise and well defined displacement of the fibers, and thus well defined in-depth tactile feedback at a desired coordinate of the touch surface. However, according to other embodiments of the invention, it is in principle sufficient if only one of the longitudinal elements of a pair moves towards another adjacent longitudinal element, thus decreasing the distance d1 between adjacent longitudinal elements by movement of only one of the longitudinal elements F1-Fn. As such, it would also work if the actuator 6 is coupled with only one fiber of a pair of fibers (e.g. shifting the respective fiber by a transverse movement in a direction transverse to the longitudinal extension of the fiber), or if the fibers are not grouped in pairs and/or if every second one of them is displaceable by the actuator.

As shown in Fig. 1, the location at which a first tensioned fiber pair (here: Y7) and a second tensioned fiber pair (here: X6) cross each other corresponds to a XY coordinate (here: X=6, Y=7) of the touch of the user input member 5.

According to another embodiment, as shown in Fig. 5, a first tensioned fiber pair (here: Y7) forms a touch area delimitation BY arranged in X direction, and a second tensioned fiber pair (here: X6) forms a touch area delimitation BX arranged in Y direction. Such touch area delimitations BX, BY particularly form an obstacle which may be felt by the user input member 5 when touching and moving across the touch surface 24 so that the touch input member 5 (e.g. user's finger) can tactile-feel the varying pressing resistance RT>RN at the location of the corresponding fiber pairs X6, Y7. With such arrangement, the usable haptic area 3 can be subdivided into a plurality of touch areas A1-A4, for example subdividing the touch surface 24 into respective "touch buttons" (here: four touch buttons) corresponding to A1-A4. In this regard, any layout and subdivision of touch areas can be arranged by displacement (e.g. tensioning) of corresponding fiber elements F1-Fn.

The embodiment as shown and described with respect to Fig. 5 can be combined with that according to Fig. 1, in that within each touch area A1-A4 are respective touch can be associated with a tactile feedback when pressing a location within the respective touch area A1-A4 by activating displacement (e.g. tensioning) of respective fibers F1-Fn at the location/coordinate of the actual touch.

For example, if the user touches the coordinate X=3, Y=3 within touch area A1, the fiber pairs X3 and Y3 are tensioned upon a corresponding user's touch in addition to the fiber pairs X6 and Y7 delimiting the touch areas A1-A4. Thus, in summary, four fiber pairs are tensioned at the same time. In a typical implementation, the fiber pairs X3 and Y3 are tensioned only for a short period of time for generating the tactile feedback during the actual touch, whereas the fiber pairs X6 and Y7 are tensioned for a longer time period as they are used for configuring the touch surface layout. If the touch area layout should change (for example when switching the HMI), then different fibers F1-Fn may be tensioned for creating different touch area delimitations BX, BY depending on the respective touch area layout.

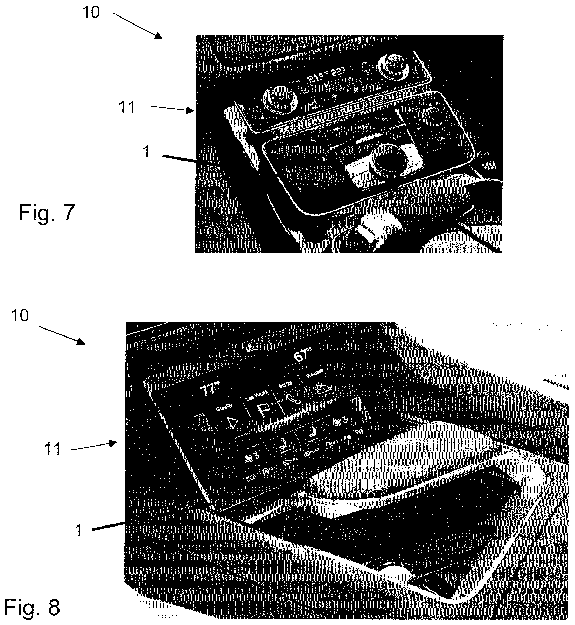

Figures 7 and 8 each show an input apparatus 1, according to various embodiments as described herein, comprised in a vehicle 10 according to an embodiment of the invention. In each of the embodiments, the input apparatus 1 according to the invention is configured to provide at least one input functionality for a human machine interface 11 of the vehicle 10. In the embodiment of Fig. 7, the input apparatus 1 comprises a dark (non-transparent) touch surface which may be configured with different touch areas A1-A4 as shown in Fig. 5. With such configuration, the user can nevertheless physically tactile-feel the areas A1-A4 which can be pressed without looking at the input apparatus 1, so that the user can stay concentrated with the eyes on the road. In the embodiment of Fig. 8, the input apparatus 1 comprises a configured touch surface (e.g., with symbols depicted permanently or dynamically on the touch surface). Following the principle according to Fig. 5, the symbols may be configured to be arranged within respective touch areas A1-A4 by respective touch area delimitiations between them. For example, in each of the embodiments of Figures 7 and 8, the input apparatus 1 being part of the HMI 11 is arranged in the center console of the vehicle.

While the invention has been described with reference to exemplary embodiments, it will be understood by those skilled in the art that various changes or combinations of embodiments may be made without departing from the scope of the claims. Therefore, it is intended that the invention not be limited to the particular embodiments disclosed.

## Claims

1. An input apparatus (1) comprising
- a touch sensitive input device (2) configured so as to detect a touch of a user input member (5) to provide at least one input functionality,
- the touch sensitive input device (2) comprising a touch surface (24) and having a pressing resistance (RN, RT) upon a touch of the user input member (5) in a pressing direction transverse to the touch surface (24),
- the touch sensitive input device (2) further comprising at least one layer (23, 22) arranged beneath the touch surface (24), wherein the at least one layer (23, 22) comprises a plurality of longitudinal elements (F1-Fn) which are displaceable within the at least one layer (23, 22) with respect to one another, and
- an actuator (6) being configured to actuate a displacement of at least a selected one of the longitudinal elements (F1-Fn) during a touch of the user input member (5),
- wherein the touch sensitive input device (2) is configured to provide a pressing resistance (RN, RT) for the user input member (5) which varies upon the displacement of the at least one of the longitudinal elements (F1-Fn) at a location of a touch of the user input member (5) generating a tactile feedback for the user input member (5),
**characterized in that** within the plurality of longitudinal elements (F1-Fn) at least respective two of the longitudinal elements (F1-Fn) are twisted with respect to one another forming a respective pair (X1-Y12) of longitudinal elements (F1-Fn).

2. The input apparatus according to claim 1, wherein the at least one layer (23, 22) comprises a plurality of longitudinal thread elements (F1-Fn), particularly a plurality of longitudinal fiber elements (F1-Fn), which are coupled with the actuator (6).

3. The input apparatus according to claim 1 or 2, wherein upon displacement of the selected one of the longitudinal elements (F1-Fn), a distance (d1) of the respective one of the longitudinal elements (F1-Fn) to an adjacent one of the longitudinal elements (F1-Fn) decreases thereby increasing the pressing resistance for the user input member (5).

4. The input apparatus according to one of claims 1 to 3, wherein the actuator (6) is configured to actuate displacement by at least one of a pulling movement and rotating movement of the respective pair (X1-Y12) of longitudinal elements.

5. The input apparatus according to one of claims 1 to 4, wherein the plurality of longitudinal elements (F1-Fn) are arranged in a matrix configuration, wherein the actuator (6) is configured to actuate displacement of at least a first one of the longitudinal elements (F1-Fn) arranged in a first direction (X) and displacement of at least a second one of the longitudinal elements (F1-Fn) arranged in a second direction (Y) which is transverse to the first direction (X), wherein the location at which the first one and second one of the longitudinal elements (F1-Fn) cross each other corresponds to a coordinate of the touch of the user input member (5).

6. The input apparatus according to one of claims 1 to 4, wherein the plurality of longitudinal elements (F1-Fn) are arranged in a matrix configuration, wherein the actuator (6) is configured to actuate displacement of at least a first one of the longitudinal elements (F1-Fn) arranged in a first direction (X) and/or displacement of at least a second one of the longitudinal elements (F1-Fn) arranged in a second direction (Y) which is transverse to the first direction (X), wherein the at least first one of the longitudinal elements (F1-Fn) forms a first touch area delimitation (BY) and the at least second one of the longitudinal elements (F1-Fn) forms a second touch area delimitation (BX).

7. The input apparatus according to one of claims 1 to 6, wherein
- the at least one layer (23, 22) comprises a plurality of longitudinal thread elements (F1-Fn), with at least respective two of the longitudinal thread elements (F1-Fn) twisted with respect to one another forming a respective thread pair (X1-Y12),
- wherein the plurality of longitudinal thread elements (F1-Fn) are arranged in a XY thread pair matrix configuration, with X and Y being orthogonal directions in a plane parallel to the touch surface (24) and a first plurality of thread pairs (Y1-Y12) arranged in X direction and a second plurality of thread pairs (X1-X12) arranged in Y direction,
- wherein the actuator (6) is configured to actuate displacement by at least one of a pulling movement and rotating movement of a first thread pair (Y1-Y12) arranged in X direction and/or by at least one of a pulling movement and rotating movement of a second thread pair (X1-X12) arranged in Y direction.

8. The input apparatus according to claim 7, wherein the location at which the first thread pair (Y1-Y12) and second thread pair (X1-X12) cross each other corresponds to a XY coordinate of the touch of the user input member (5).

9. The input apparatus according to claim 7, wherein the first thread pair (Y7) forms a touch area delimitation (BY) in X direction and the second thread pair (X6) forms a touch area delimitation (BX) in Y direction.

10. The input apparatus according to claim 7, wherein
- the actuator (6) is configured to actuate displacement by at least one of a pulling movement and rotating movement of a third thread pair (Y7) arranged in X direction and/or by at least one of a pulling movement and rotating movement of a fourth thread pair (X6) arranged in Y direction,
- wherein the location at which the first thread pair (Y1-Y12) and second thread pair (X1-X12) cross each other corresponds to a XY coordinate of the touch of the user input member (5), and
- the third thread pair (Y7) forms a touch area delimitation (BY) in X direction and the fourth thread pair (X6) forms a touch area delimitation (BX) in Y direction.

11. The input apparatus according to one of claims 1 to 10, wherein
- the touch sensitive input device (2) comprises at least one first layer (23) and second layer (22) arranged one upon the other and beneath the touch surface (24),
- the plurality of longitudinal elements (F1-Fn) are arranged in a matrix configuration, wherein at least a first one of the longitudinal elements (F1-Fn) is arranged in a first direction (X) in the first layer (23) and at least a second one of the longitudinal elements (F1-Fn) is arranged in the second layer (22) in a second direction (Y) which is transverse to the first direction.

12. The input apparatus according to one of claims 1 to 11, wherein the plurality of longitudinal elements (F1-Fn) are arranged within a silicon rubber material.

13. The input apparatus according to one of claims 1 to 12, wherein
- the plurality of longitudinal elements (F1-Fn) are arranged such that a distance (d1) of the selected one of the longitudinal elements (F1-Fn) to an adjacent one of the longitudinal elements (F1-Fn) is approximately 2 mm between respective center points of the longitudinal elements, and a distance (d1) of the selected one of the longitudinal elements (F1-Fn) to the adjacent one of the longitudinal elements (F1-Fn) is approximately 1 mm between respective center points of the longitudinal elements upon displacement of the selected one of the longitudinal elements (F1-Fn),
- particularly wherein the at least one layer (23, 22) comprises a plurality of longitudinal thread elements (F1-Fn), with at least respective two of the longitudinal thread elements (F1-Fn) twisted with respect to one another forming a respective thread pair (X1-Y12), and at least two of the thread pairs (X1-Y12) are arranged at a distance (d2) of approximately 5 mm between respective center points of the thread pairs (X1-Y12).

14. A vehicle (10) comprising an input apparatus (1) according to one of the preceding claims configured to provide at least one input functionality for a human machine interface (11) of the vehicle.

## Patentansprüche

1. Eingabevorrichtung (1), aufweisend
- eine berührungsempfindliche Eingabeeinrichtung (2), die zum Erfassen einer Berührung eines Benutzer-Eingabeelements (5) ausgebildet ist, um mindestens eine Eingabefunktionalität bereitzustellen,
- wobei die berührungsempfindliche Eingabeeinrichtung (2) eine Berührungsfläche (24) aufweist und einen Drückwiderstand (RN, RT) bei einer Berührung des Benutzer-Eingabeelements (5) in einer Drückrichtung quer zu der Berührungsfläche (24) besitzt,
- wobei die berührungsempfindliche Eingabeeinrichtung (2) ferner mindestens eine Schicht (23, 22) aufweist, die unter der Berührungsfläche (24) angeordnet ist, wobei die mindestens eine Schicht (23, 22) eine Mehrzahl von länglichen Elementen (F1-Fn) aufweist, die innerhalb der mindestens einen Schicht (23, 22) relativ zueinander verschiebbar sind, und
- einen Aktuator (6), der zum Auslösen einer Verschiebung von mindestens einem ausgewählten der länglichen Elemente (F1-Fn) während einer Berührung des Benutzer-Eingabeelements (5) ausgebildet ist,
- wobei die berührungsempfindliche Eingabeeinrichtung (2) derart ausgebildet ist, dass sie einen Drückwiderstand (RN, RT) für das Benutzer-Eingabeelement (5) bereitstellt, der bei Verschiebung des mindestens einen der länglichen Elemente (F1-Fn) an einer Berührungsstelle des Benutzer-Eingabeelements (5) variiert, wodurch eine taktile Rückmeldung für das Benutzer-Eingabeelement (5) erzeugt wird,
**dadurch gekennzeichnet, dass** innerhalb der Mehrzahl von länglichen Elementen (F1-Fn) mindestens jeweils zwei der länglichen Elemente (F1-Fn) zueinander verdreht sind und ein jeweiliges Paar (X1-Y12) von länglichen Elementen (F1-Fn) bilden.

2. Eingabevorrichtung nach Anspruch 1,
wobei die mindestens eine Schicht (23, 22) eine Mehrzahl von länglichen Fadenelementen (F1-Fn) aufweist, insbesondere eine Mehrzahl von länglichen Faserelementen (F1-Fn), die mit dem Aktuator (6) gekoppelt sind.

3. Eingabevorrichtung nach Anspruch 1 oder 2,
wobei bei Verschiebung des ausgewählten der länglichen Elemente (F1-Fn) ein Abstand (d1) des jeweiligen der länglichen Elemente (F1-Fn) zu einem benachbarten von den länglichen Elemente (F1-Fn) abnimmt und dadurch der Drückwiderstand für das Benutzer-Eingabeelement (5) erhöht wird.

4. Eingabevorrichtung nach einem der Ansprüche 1 bis 3,
wobei der Aktuator (6) dazu ausgebildet ist, eine Verschiebung durch mindestens eines von einer Zugbewegung und einer Drehbewegung des jeweiligen Paares (X1-Y12) von länglichen Elementen auszulösen.

5. Eingabevorrichtung nach einem der Ansprüche 1 bis 4,
wobei die Mehrzahl von länglichen Elementen (F1-Fn) in einer Matrixkonfiguration angeordnet ist, wobei der Aktuator (6) dazu ausgebildet ist, eine Verschiebung von mindestens einem ersten der in einer ersten Richtung (X) angeordneten länglichen Elemente (F1-Fn) sowie eine Verschiebung von mindestens einem zweiten der länglichen Elemente (F1-Fn) auszulösen, die in einer zweiten Richtung (Y) angeordnet sind, die quer zu der ersten Richtung (X) verläuft, wobei die Stelle, an der sich das erste und das zweite der länglichen Elemente (F1-Fn) kreuzen, einer Koordinate der Berührung des Benutzer-Eingabeelements (5) entspricht.

6. Eingabevorrichtung nach einem derAnsprüche 1 bis 4,
wobei die Mehrzahl von länglichen Elementen (F1-Fn) in einer Matrixkonfiguration angeordnet ist, wobei der Aktuator (6) dazu ausgebildet ist, eine Verschiebung von mindestens einem ersten der in einer ersten Richtung (X) angeordneten länglichen Elemente (F1-Fn) und/oder eine Verschiebung von mindestens einem zweiten der länglichen Elemente (F1-Fn) auszulösen, die in einer zweiten Richtung (Y) angeordnet sind, die quer zu der ersten Richtung (X) verläuft, wobei das mindestens erste der länglichen Elemente (F1-Fn) eine erste Berührungsflächenbegrenzung (BY) bildet und das mindestens zweite der länglichen Elemente (F1-Fn) eine zweite Berührungsflächenbegrenzung (BX) bildet.

7. Eingabevorrichtung nach einem der Ansprüche 1 bis 6, wobei
- die mindestens eine Schicht (23, 22) eine Mehrzahl von länglichen Fadenelementen (F1-Fn) aufweist, wobei mindestens zwei jeweilige längliche Fadenelemente (F1- Fn), die zueinander verdreht sind, ein jeweiliges Fadenpaar (X1-Y12) bilden,
- wobei die Mehrzahl von länglichen Fadenelementen (F1-Fn) in einer XY-Fadenpaar-Matrixkonfiguration angeordnet ist, wobei X und Y orthogonale Richtungen in einer zu der Berührungsfläche (24) parallelen Ebene sind und eine erste Mehrzahl von Fadenpaaren (Y1-Y12) in X-Richtung angeordnet ist und eine zweite Mehrzahl von Fadenpaaren (X1-X12) in Y-Richtung angeordnet ist,
- wobei der Aktuator (6) dazu ausgebildet ist, eine Verschiebung durch mindestens eines von einer Zugbewegung und einer Drehbewegung eines in X-Richtung angeordneten ersten Fadenpaares (Y1-Y12) und/oder durch mindestens eines von einer Zugbewegung und einer Drehbewegung eines in Y-Richtung angeordneten zweiten Fadenpaares (X1-X12) auszulösen.

8. Eingabevorrichtung nach Anspruch 7,
wobei die Stelle, an der das erste Fadenpaar (Y1-Y12) und das zweite Fadenpaar (X1-X12) einander kreuzen, einer XY-Koordinate der Berührung des Benutzer-Eingabeelements (5) entspricht.

9. Eingabevorrichtung nach Anspruch 7,
wobei das erste Fadenpaar (Y7) eine Berührungsflächenbegrenzung (BY) in X-Richtung bildet und das zweite Fadenpaar (X6) eine Berührungsflächenbegrenzung (BX) in Y-Richtung bildet.

10. Eingabevorrichtung nach Anspruch 7, wobei
- der Aktuator (6) dazu ausgebildet ist, eine Verschiebung durch mindestens eines von einer Zugbewegung und einer Drehbewegung eines in X-Richtung angeordneten dritten Fadenpaares (Y7) und/oder durch mindestens eines von einer Zugbewegung und einer Drehbewegung eines in Y-Richtung angeordneten vierten Fadenpaares (X6) auszulösen,
- wobei die Stelle, an der das erste Fadenpaar (Y1-Y12) und das zweite Fadenpaar (X1-X12) einander kreuzen, einer XY-Koordinate der Berührung des Benutzer-Eingabeelements (5) entspricht, und
- wobei das dritte Fadenpaar (Y7) eine Berührungsflächenbegrenzung (BY) in X-Richtung bildet und das vierte Fadenpaar (X6) eine Berührungsflächenbegrenzung (BX) in Y-Richtung bildet.

11. Eingabevorrichtung nach einem der Ansprüche 1 bis 10, wobei
- die berührungsempfindliche Eingabeeinrichtung (2) mindestens eine erste Schicht (23) und eine zweite Schicht (22) aufweist, die übereinander und unter der Berührungsfläche (24) angeordnet sind,
- wobei die Mehrzahl von länglichen Elementen (F1-Fn) in einer Matrixkonfiguration angeordnet ist, wobei mindestens ein erstes der länglichen Elemente (F1-Fn) in einer ersten Richtung (X) in der ersten Schicht (23) angeordnet ist und mindestens ein zweites der länglichen Elemente (F1-Fn) in der zweiten Schicht (22) in einer zweiten Richtung (Y) angeordnet ist, die quer zu der ersten Richtung verläuft.

12. Eingabevorrichtung nach einem der Ansprüche 1 bis 11,
wobei die Mehrzahl von länglichen Elementen (F1-Fn) innerhalb eines Silikongummimaterials angeordnet ist.

13. Eingabevorrichtung nach einem der Ansprüche 1 bis 12, wobei
- die Mehrzahl von länglichen Elemente (F1-Fn) derart angeordnet ist, dass ein Abstand (d1) des ausgewählten der länglichen Elemente (F1-Fn) zu einem benachbarten der länglichen Elemente (F1-Fn) ca. 2 mm zwischen jeweiligen Mittelpunkten der länglichen Elemente beträgt, und ein Abstand (d1) des ausgewählten der länglichen Elemente (F1-Fn) zu dem benachbarten der länglichen Elemente (F1-Fn) bei einer Verschiebung des ausgewählten der länglichen Elemente (F1-Fn) ca. 1 mm zwischen jeweiligen Mittelpunkten der länglichen Elemente beträgt,
- wobei insbesondere die mindestens eine Schicht (23, 22) eine Mehrzahl von länglichen Fadenelementen (F1-Fn) aufweist, wobei mindestens jeweils zwei der länglichen Fadenelemente (F1-Fn), die zueinander verdreht sind, ein jeweiliges Fadenpaar (X1-Y12) bilden, und mindestens zwei der Fadenpaare (X1 -Y12) mit einem Abstand (d2) von ca. 5 mm zwischen jeweiligen Mittelpunkten der Fadenpaare (X1-Y12) angeordnet sind.

14. Fahrzeug (10) mit einer Eingabevorrichtung (1) nach einem der vorhergehenden Ansprüche, die dazu ausgebildet ist, mindestens eine Eingabefunktionalität für eine Mensch-Maschine-Schnittstelle (11) des Fahrzeugs bereitzustellen.

## Revendications

1. Appareil d'entrée (1) comprenant
- un dispositif d'entrée sensible tactile (2) configuré de manière à détecter le contact du membre d'entrée d'un utilisateur (5) afin de fournir au moins une fonctionnalité d'entrée,
- le dispositif d'entrée sensible tactile (2) comprenant une surface tactile (24) et présentant une résistance à la pression (RN, RT) au contact du membre d'entrée de l'utilisateur (5) selon une direction de pression transversale à la surface tactile (24),
- le dispositif d'entrée sensible tactile (2) comprenant en outre au moins une couche (23, 22) située en dessous de la surface tactile (24), ladite couche tactile (23, 22), une au moins, étant composée d'une pluralité d'éléments longitudinaux (F1-Fn) qui peuvent être déplacés au sein de la couche en question (23, 22) les uns par rapport aux autres, et
- un actionneur (6) configuré de manière à déclencher le déplacement d'au moins un des éléments longitudinaux (F1-Fn) sélectionné lors du contact du membre d'entrée de l'utilisateur (5),
- où le dispositif d'entrée sensible tactile (2) est configuré de manière à produire une résistance à la pression (RN, RT) pour le membre d'entrée de l'utilisateur (5), résistance qui varie en fonction du déplacement de l'un au moins des éléments longitudinaux (F1-Fn) à l'endroit d'un contact du membre d'entrée de l'utilisateur (5), générant un feed-back tactile au membre d'entrée de l'utilisateur (5),
- **caractérisé en ce qu'**au sein de la pluralité d'éléments longitudinaux (F1-Fn), au moins deux des éléments longitudinaux (F1-Fn), respectivement, sont torsadés l'un par rapport à l'autre, formant ainsi une paire (X1-Y12) d'éléments longitudinaux (F1-Fn).

2. L'appareil d'entrée selon la revendication 1, **caractérisé en ce que** la couche (23, 22), une au moins, comprend une pluralité d'éléments en fil longitudinaux (F1-Fn), en particulier une pluralité d'éléments en fibre longitudinaux (F1-Fn), qui sont couplés à l'actionneur (6).

3. L'appareil d'entrée selon la revendication 1 ou 2, **caractérisé en ce que**, lors du déplacement de l'un des éléments longitudinaux (F1-Fn) sélectionné, une distance (d1) de l'un des éléments longitudinaux (F1-Fn) en question à l'élément longitudinal (F1-Fn) adjacent diminue, augmentant par là même la résistance à la pression pour le membre d'entrée de l'utilisateur (5).

4. L'appareil d'entrée selon l'une des revendications 1 à 3, **caractérisé en ce que** l'actionneur (6) est configuré de manière à déclencher un déplacement par au moins un mouvement de traction et un mouvement de rotation de la paire respective (X1-Y12) d'éléments longitudinaux.

5. L'appareil d'entrée selon l'une des revendications 1 à 4, **caractérisé en ce que** la pluralité d'éléments longitudinaux (F1-Fn) sont disposés selon une configuration matricielle, où l'actionneur (6) est configuré de manière à déclencher le déplacement d'au moins un premier des éléments longitudinaux (F1-Fn) disposé dans une première direction (X) et le déplacement d'au moins un deuxième des éléments longitudinaux (F1-Fn) agencé dans une deuxième direction (Y) qui est transversale à la première direction (X), sachant que l'endroit où le premier et le deuxième des éléments longitudinaux (F1-Fn) se croisent correspond a une coordonnée du contact du membre d'entrée de l'utilisateur (5).

6. L'appareil d'entrée selon l'une des revendications 1 à 4, **caractérisé en ce que** la pluralité d'éléments longitudinaux (F1-Fn) sont disposés selon une configuration matricielle, où l'actionneur (6) est configuré de manière à déclencher le déplacement d'au moins un premier des éléments longitudinaux (F1-Fn) disposé dans une première direction (X) et/ou le déplacement d'au moins un deuxième des éléments longitudinaux (F1-Fn) disposé dans une deuxième direction (Y) qui est transversale à la première direction (X), sachant que le premier au moins des éléments longitudinaux (F1-Fn) forme la délimitation d'une première zone de contact (BY) et que le deuxième au moins des éléments longitudinaux (F1-Fn) forme la délimitation d'une deuxième zone de contact (BX).

7. L'appareil d'entrée selon l'une des revendications 1 à 6, **caractérisé en ce que**
- la couche (23, 22), une au moins, comprend une pluralité d'éléments en fil longitudinaux (F1-Fn), sachant qu'au moins deux des éléments en fil longitudinaux (F1-Fn), respectivement, sont torsadés l'un par rapport à l'autre, formant respectivement une paire de fil (X1-Y12),
- la pluralité d'éléments en fil longitudinaux (F1-Fn) sont disposés selon une configuration matricielle de paires de fils XY, X et Y étant des directions orthogonales sur un plan parallèle à la surface de contact (24), une première pluralité de paires de fils (Y1-Y12) étant disposées dans la direction X et une deuxième pluralité de paires de fils (X1-X12) étant disposées dans la direction Y,
- l'actionneur (6) est configuré de manière à déclencher un déplacement par au moins un mouvement de traction et un mouvement de rotation d'une première paire de fils (Y1-Y12)
disposée dans la direction X et/ou par au moins un mouvement de traction et un mouvement de rotation d'une deuxième paire de fils (X1-X12) disposée dans la direction Y.

8. L'appareil d'entrée selon la revendication 7, **caractérisé en ce que** l'endroit où la première paire de fils (Y1-Y12) et la deuxième paire de fils (X1-X12) se croisent correspond à une coordonnée XY du contact du membre d'entrée de l'utilisateur (5).

9. L'appareil d'entrée selon la revendication 7, **caractérisé en ce que** la première paire de fils (Y7) forme la délimitation d'une zone de contact (BY) dans la direction X et la deuxième paire de fils (X6) forme la délimitation d'une zone de contact (BX) dans la direction Y.

10. L'appareil d'entrée selon la revendication 7, **caractérisé en ce que**
- l'actionneur (6) est configuré de manière à déclencher un déplacement par au moins un mouvement de traction et un mouvement de rotation d'une troisième paire de fils (Y7) disposée dans la direction X et/ou par au moins un mouvement de traction et un mouvement de rotation d'une quatrième paire de fils (X6) disposée dans la direction Y,
- l'endroit où la première paire de fils (Y1-Y12) et la deuxième paire de fils (X1-X12) se croisent correspond à une coordonnée XY du contact du membre d'entrée de l'utilisateur (5) et
- la troisième paire de fils (Y7) forme la délimitation d'une zone de contact (BY) dans la direction X et la quatrième paire de fils (X6) forme la délimitation d'une zone de contact (BX) dans la direction Y.

11. L'appareil d'entrée selon l'une des revendications 1 à 10, **caractérisé en ce que**
- le dispositif d'entrée sensible tactile (2) comprend au moins une première couche (23) et une deuxième couche (22) disposées l'une au-dessus de l'autre et au-dessous de la surface de contact (24),
- la pluralité d'éléments longitudinaux (F1-Fn) sont disposés selon une configuration matricielle où au moins un premier des éléments longitudinaux (F1-Fn) est disposé dans une première direction (X) dans la première couche (23) et au moins un deuxième des éléments longitudinaux (F1-Fn) est disposé dans la deuxième couche (22) dans une deuxième direction (Y) qui est transversale à la première direction.

12. L'appareil d'entrée selon l'une des revendications 1 à 11, **caractérisé en ce que** la pluralité d'éléments longitudinaux (F1-Fn) est disposée dans un matériau en caoutchouc de silicone.

13. L'appareil d'entrée selon l'une des revendications 1 à 12, **caractérisé en ce que**
- la pluralité d'éléments longitudinaux (F1-Fn) sont disposés de telle sorte qu'une distance (d1) entre l'un des éléments longitudinaux (F1-Fn) sélectionné et l'un des éléments longitudinaux (F1-Fn) adjacent est approximativement de 2 mm, mesurée au niveau des points centraux des éléments longitudinaux, et qu'une distance (d1) de l'un des éléments longitudinaux (F1-Fn) sélectionné à l'un des éléments longitudinaux (F1-Fn) adjacent est approximativement de 1 mm entre les points centraux respectifs des éléments longitudinaux lors du déplacement de l'élément longitudinal (F1-Fn) sélectionné,
- en particulier, la couche (23, 22), une au moins, comprend une pluralité d'éléments en fil longitudinaux (F1-Fn), dont deux au moins des éléments en fil longitudinaux (F1-Fn), respectivement, sont torsadés l'un par rapport à l'autre, formant une paire de fils (X1-Y12), et où deux des paires de fils (X1-Y12) au moins sont disposées à une distance (d2) d'approximativement 5 mm entre les points centraux respectifs des paires de fils (X1-Y12).

14. Un véhicule (10) comprenant un appareil d'entrée (1) selon l'une des revendications précédentes, configuré de manière à fournir au moins une fonctionnalité d'entrée pour une interface homme-machine (11) du véhicule.
